(19) Europäisches Patentamt
European Patent Office
Office européen des brevets

(11) Veröffentlichungsnummer: **0 022 518**
**B1**

(12) # EUROPÄISCHE PATENTSCHRIFT

(45) Veröffentlichungstag der Patentschrift: **27.07.83**

(21) Anmeldenummer: **80103760.7**

(22) Anmeldetag: **02.07.80**

(51) Int. Cl.³: **C 08 J 3/06** // C08L75/06, C09D3/72, C08G18/08, C08G18/83

(54) **Wässrige Dispersionen urethanmodifizierter Polyester und Verfahren zu ihrer Herstellung.**

(30) Priorität: **14.07.79 DE 2928552**

(43) Veröffentlichungstag der Anmeldung: **21.01.81 Patentblatt 81/3**

(45) Bekanntmachung des Hinweises auf die Patenterteilung: **27.07.83 Patentblatt 83/30**

(84) Benannte Vertragsstaaten: **AT BE CH DE FR GB IT LI NL SE**

(56) Entgegenhaltungen:
**DE-B-1 237 306**
**FR-A-2 030 803**
**FR-A- 2 317 317**
**FR-A-2 317 318**
**FR-A-2 386 592**

(73) Patentinhaber: **BAYER AG, Zentralbereich Patente, Marken und Lizenzen, D-5090 Leverkusen 1, Bayerwerk (DE)**

(72) Erfinder: **Zabrocki, Karl, Dr., Edelfalter 33, D-4044 Büttgen (DE)**
Erfinder: **Bottenbruch, Ludwig, Dr., Wöhlerstrasse 5, D-4150 Krefeld (DE)**
Erfinder: **Weider, Franz, Dr., Jakob-Fröhlen-Strasse 36, D-5090 Leverkusen (DE)**

**EP 0 022 518 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Wäßrige Dispersionen urethanmodifizierter Polyester und Verfahren zu ihrer Herstellung

Die vorliegende Erfindung betrifft wäßrige Dispersionen von urethanmodifizierten Polyestern und ein Verfahren zur ihrer Herstellung.

Unter »wäßrigen Dispersionen« werden im folgenden heterogene Systeme verstanden, die undurchsichtig sind und bei denen die organische Harzphase als Teilchen einer mittleren Größe von 50—5000 nm in Wasser verteilt ist. Unter den Begriff »wäßrige Dispersionen« fallen im folgenden also nicht jene Lösungen urethanmodifizierter Polyester, die durch neutralisierte Säuregruppen in wäßriger Phase homogen verteilt sind und durchsichtige Lösungen bilden; derartige Harze besitzen in der Regel Säurezahlen >40, werden in mit Wassermischbaren organischen Lösungsmitteln vorgelöst und nach der Neutralisation mit Wasser zu homogenen, durchsichtigen Lösungen verdünnt.

Für den zunehmenden Einsatz wäßriger Dispersionen von Lackbindemitteln sprechen hauptsächlich zwei Gründe: Erstens besitzen sie den Vorteil, daß man auf die Verwendung organischer Lösungsmittel verzichten kann, und zweitens neigen sie — anders als die aus organischer Lösung applizierten Überzugsmittel — kaum zum Ablaufen an senkrechten Flächen (vgl. F. Armitage, L. G. Trace, J. Oil and Colour Chemists Assoc. 1957, S. 860).

Es ist bereits bekannt, urethanmodifizierte Polyester in wäßriger Dispersion herzustellen und diese als Beschichtungsmittel zu verwenden (D. Dieterich, H. Reiff, Adv. in Urethane Science and Technology 4 (1976), 112—131). Nach dem besonders einfach durchzuführenden Schmelzdispergierverfahren werden entsprechend den in dieser Literaturstelle beschriebenen Herstellverfahren anionische oder kationische Gruppen an die Polymerkette von Polyesterurethanen geknüpft und diese Polyesterurethane anschließend unter Salzbildung in der Wasserphase dispergiert. In der Praxis haben sich anionische Systeme wegen ihrer besseren Stabilität gegenüber Elektrolyten, Farbstoffen etc. besser bewährt (A. P. Grekov, Sint. fiz. chim. polimerov 21 (1977), 48—55).

Anionische dispergierbare Polyesterurethane lassen sich gemäß D. Dieterich und H. Reiff dadurch herstellen, daß man anionische, salzbildungsfähige Gruppen tragende polyfunktionelle Substanzen, z. B. Tri- und Tetracarbonsäuren, carboxylmodifizierte Oligomere, Diaminosulfonsäuren bei der Isocyanatpolyadditionsreaktion in die Polymerkette einbaut. Bei diesem Reaktionsschritt besteht in hohem Maß die Gefahr von Nebenreaktionen, welche zur Schaumbildung, zu vernetzten Produktanteilen und somit zu unbrauchbaren Produkten führen. Die Umsetzung ist daher insbesondere bei großen Ansätzen nur schwer zu steuern. Außerdem lassen sich diese Reaktionen meist nur in Lösungsmitteln ausführen.

Die von D. Dieterich und H. Reiff beschriebenen Polyurethanionomeren enthalten aufgrund der Zusammensetzung der Ausgangsprodukte einen bestimmten Anteil Harnstoffgruppen und salzbildungsfähige Gruppen, was zwangsläufig die ausreichende Wasserfestigkeit und Wetterbeständigkeit daraus hergestellter Überzüge in Frage stellt.

Wie die Autoren beschrieben, führt die Vielzahl polarer Gruppen zu intermolekularer Wechselwirkung und Pseudogelbildung der Polyurethane (vor der Dispergierung).

Diese Schwierigkeiten werden gemäß DE-AS 12 37 306 durch die Herstellung anionischer Polyesterurethane aus hochmolekularen linearen, vorzugsweise aliphatischen Polyesterurethanen, die mit cyclischen, salzbildende Gruppen erzeugenden Verbindungen umgesetzt werden, umgangen. Mit Hilfe der dort beschriebenen Technik sind Polyesterurethane mit Molekulargewichten von 5000 bis 2 000 000 in wäßriger Phase zu Produkten dispergierbar, welche sich auch zur Herstellung von Überzügen eignen. Lineare aliphatische Polyesterurethane besitzen als Überzüge den Nachteil ungenügender Härte und unzureichender Lösungsmittelbeständigkeit. Verwendet man als Basispolymer zur Herstellung der Polyesterurethane verzweigte und/oder aromatische Oligo- und Polyester, wie sie als Bindemittelbasis für den Lacksektor bekannt sind, so werden die damit hergestellten Polyesterurethane derartig hochviskos, daß sie nicht mehr unmittelbar aus der Schmelze, sondern nur noch unter Zusatz größerer Mengen Lösungsmittel dispergiert werden können.

Gegenstand der Erfindung sind wäßrige Dispersionen von urethanmodifizierten Polyestern, dadurch gekennzeichnet, daß sie aus

I. 25—60 Gew.-% schmelzbaren urethanmodifizierten verzweigten Oligo- und/oder Polyestern mit Molekulargewichten <5000, vorzugsweise <4000 und Säurezahlen von 10—40, vorzugsweise 10—30, und einem Gehalt von <1, vorzugsweise unter 0,1, insbesondere unter 0,01 Gew.-%, bezogen auf I, Harnstoffgruppen, wobei die Substanzen I durch Umsetzung von urethanmodifizierten Oligo- und/oder Polyestern mit Säurezahlen <10 und OH-Zahlen von 30—500, vorzugsweise 50—280, mit Di- und/oder Tricarbonsäureanhydriden, erhältlich sind,

IIa) 0,02 bis 4 Gew.-% eines nichtionischen Emulgators mit einem berechneten HLB-Wert von 10 bis 20, vorzugsweise entsprechend der Formel

$$R-(OCH_2-CH_2)_n-OH,$$

worin

R einen Alkylrest mit 12 bis 30 C-Atomen oder

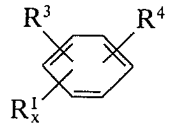

$R^1$ einen Alkylrest mit 4 bis 20 C-Atomen oder

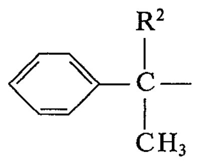

$R^2$ ein Wasserstoffatom, einen Methyl- oder Phenylrest,
$R^3$ eine Methylgruppe, einen Phenylrest oder ein Wasserstoffatom,
$R^4$ eine Methylgruppe oder ein Wasserstoffatom und
n eine Zahl von 10 bis 40, vorzugsweise 15 bis 25,
X eine Zahl von 1 bis 3,5, vorzugsweise 1—3.0, bedeuten,

IIb) 0,02 bis 4 Gew.-% mindestens eines polyethermodifizierten Polyester-Emulgatorharzes, das 10 bis 50, vorzugsweise 10 bis 20 Gew.-%, bezogen auf Emulgatorharz IIb, einkondensierte Polyalkylenglykolreste, vorzugsweise über Urethangruppen mit dem Polyester-Emulgatorharz-Molekül verbunden, enthält und

III. 32 bis 75 Gew.-% wäßriger Phase, die 30 bis 150% der für eine vollkommene Neutralisation der Carboxylgruppen der Polyester I und IIb) ausreichenden Alkali-, Ammoniak- oder Aminmenge enthält, wobei sich die Prozentangaben der Komponenten I, IIa, IIb und III auf die Summe der Komponenten I—III beziehen,

bestehen.

Es war überraschend, daß es möglich war, erfindungsgemäße Dispersionen herzustellen, welche sich einerseits trotz Verzweigungen des Oligo- bzw. Polyesterharzes aus der Schmelze dispergieren und gleichzeitig andererseits trotz ihres relativ niedrigen Molekulargewichts zu Überzügen mit hervorragender Qualität verarbeiten lassen. Die erfindungsgemäßen Dispersionen zeichnen sich überraschenderweise durch kleine Teilchengrößen der dispergierten Phase sowie durch gute Lagerstabilität aus. Die daraus herstellbaren Überzügen weisen ein ausgezeichnetes Härte/Elastizitäts-Verhältnis, hohen Glanz sowie gute Haftung auf.

Die erfindungsgemäß zu dispergierenden urethanmodifizierten Polyester kann man durch Umsetzung von Oligo- und/oder Polyestern und Polyisocyanaten herstellen, wonach das entstandene Additionsprodukt mit Carboxylgruppen bildenden Substanzen, vorzugsweise Dicarbonsäureanhydriden, »aufgesäuert« wird. Die Oligo- und Polyester, im folgenden als Vorkondensate bezeichnet, kann man nach bekannten Verfahren aus Alkoholen und Carbonsäuren herstellen, was z. B. bei D. H. Solomon: The Chemistry of Irganic Filmformers, S. 75—101, John Wiley & Sons Inc., New York, 1967, beschrieben wird.

Für die Synthese der Vorkondensate bevorzugte Alkohole sind aliphatische, cycloaliphatische und/oder araliphatische Alkohole mit 1 bis 6, vorzugsweise 2 bis 4, an nichtaromatische C-Atome gebundenen OH-Gruppen und 1 bis 24 C-Atomen pro Molekül, z. B. Glykole wie Ethylenglykol, Propylenglykol, Butandiole, Neopentylglykol, Trimethylpentadiol-1,3, Hexandiole; Etheralkohle wie Di- und Triethylenglykole; oxethylierte Bisphenole mit 2 Alkylenoxidresten pro Molekül; perhydrierte Bisphenole; ferner Trimethylolethan, Trimethylolpropan, Trimethylolhexan, Glycerin, Pentaerythrit, Dipentaerythrit, Dimethylolcyclohexan, Mannit und Sorbit; einwertige, kettenabbrechende Alkohole wie Methanol, Propanol, Butandol, Cyclohexanol, 2-Ethyl-hexanol und Benzylalkohol.

Besonders bevorzugte Alkohole sind Neopentylglykol, Trimethylolpropan, Dimethylolcyclohexan und Perhydrobisphenol.

Die Vorkondensate können bis zu 15 Gew.-%, bezogen auf das Vorkondensat, einwertige Alkoholreste einkondensiert enthalten.

Für die Synthese der Vorkondensate bevorzugte Säurekomponenten sind aliphatische, cycloaliphatische und/oder aromatische mehrbasische Carbonsäuren, vorzugsweise Di- und Tricarbonsäuren, mit 4 bis 12 C-Atomen pro Molekül oder deren veresterungsfähige Derivate (z. B. Anhydride oder Ester), z. B. Phthalsäureanhydrid, Isophthalsäure, Terephthalsäure, Tetrahydro- und Hexahydrophthalsäureanhydrid, Trimellithsäureanhydrid, Pyromellithsäureanhydrid, Maleinsäureanhydrid, Fumarsäure, Adipinsäure, Glutarsäure und Bernsteinsäure, Azelainsäure, Endomethylentetrahydrophthalsäure, ferner halogenierte Säuren wie Chlorphthalsäuren und Hexachlor-endomethylentetrahydrophthalsäure.

Die Vorkondensate können allein aus Polycarbonsäuren und mehrwertigen Alkoholen aufgebaut werden. Es ist aber auch möglich, sie durch Einkondensation von Monocarbonsäuren zu modifizieren.

Für die Herstellung der Vorkondensate bevorzugte Monocarbonsäuren sind aliphatische, cycloaliphatische und/oder aromatische Monocarbonsäuren mit 6 bis 35 C-Atomen pro Molekül wie Benzoesäure, Butylbenzoesäure, Tolylsäure, Hexahydrobenzoesäure, Abietinsäure, Milchsäure sowie Fettsäuren, deren Mischungen und Ester derselben wie Leinöl, Sojaöl, Holzöl, Saffloröl, Ricinusöl, Baumwollsaatöl, Erdnußöl, Tallölfettsäure, Leinölfettsäure, Sojaöl-, Holzöl-, Saffloröl- und Ricinenfettsäure und aus natürlichen, ungesättigten Ölen oder Fettsäuren durch Konjugierung oder Isomerisierung gewonnene Produkte; bevorzugte gesättigte Fettsäuren sind beispielsweise Cocosfettsäuren, $\alpha$-Ethylhexansäure, Isononansäure und lineare $C_{16}-C_{18}$-Monocarbonsäuren.

Ölmodifizierte Vorkondensate aus gleichen Rohstoffen wie Alkylharze führen im Rahmen der Erfindung zu besonders füllkräftigen Überzugsmitteln. Besonders bevorzugte ölmodifizierte Vorkondensate sind solche mit Ölgehalten von 20 bis 50, vorzugsweise 25 bis 40 Gew.-%, berechnet als Triglycerid und bezogen auf Vorkondensat.

Vorkondensate für urethanmodifizierte Polyesterdispersionen, die zur Herstellung ofentrockender Lacke dienen, kommen in der Regel mit Ölgehalten von 0 bis 45 Gew.-% aus. Hohe Gehalte aromatischer Bestandteile der Vorkondensate verleihen dem Lacküberzug besondere Härte, hohe Gehalte aliphatischer Bestandteile der Vorkondensate geben ihm gute Elastizität.

Für die Herstellung luftgetrockneter Lackbindemittel auf der erfindungsgemäßen Basis verwendet man in der Regel Vorkondensate mit Gehalten an trockenen Ölen zwischen 15 und 70, vorzugsweise 45 und 65 Gew.-%, bezogen auf Vorkondensat.

Die Vorkondensate lassen sich einstufig oder in mehreren Stufen herstellen, wobei eine Stufe beispielsweise ein separater Veresterungsschritt oder eine Ölverkochung sein kann. Das als Zahlenmittel bestimmte Molekulargewicht des Vorkondensats beträgt 150—4500, vorzugsweise 250 bis 2500, bestimmt durch Dampfdruckosmometrie in Dioxan und Aceton, wobei bei differierenden Werten der niedrigere als korrekt angesehen wird.

Die Auswahl von Art und Menge der einzelnen zum Vorkondensat zu kondensierenden Rohstoffe richtet sich nach dem gewünschten Molekulargewicht und nach dem Einsatzgebiet. Die Zusammenhänge zwischen Molekulargewicht und Rohstoffmenge sind bei U. Holfort, Farbe und Lack 68 (1962), S. 513 bis 517, s. 598 bis 607, eingehend beschrieben.

Die Herstellung der Vorkondensate kann nach bekannten Verfahren (vgl. Methoden der Organischen Chemie (Houben-Weyl), Georg Thieme Verlag Stuttgart, 1963, Bd. 14/2, S. 1 bis 5, 21 bis 23, 40 bis 44, oder C. R. Martens, Alkyd Resins, Reinhold Plastics Appl. Series, Reinhold Publ. Comp. 1961, S. 51 bis 59) erfolgen, wobei Alkohole, Carbonsäure bzw. ihre Derivate und gegebenenfalls Öle durch Schmelz- oder Azeotropveresterung, bevorzugt in einer Inertatmosphäre bei Temperaturen von 140 bis 260°C umgesetzt werden. Die Reaktion kann dabei z. B. durch Messung der Säurezahl und der Viskosität verfolgt werden.

Die Vorkondensate werden bis zu Säurezahlen $<10$, vorzugsweise $<4$ verestert. Sie enthalten freie OH-Gruppen entsprechend OH-Zahlen von 30 bis 500, vorzugsweise 50 bis 280. Vorkondensate im niedrigeren OH-Zahl-Bereich eignen sich besser für lufttrocknende, Vorkondensate im hohen OH-Zahl-Bereich besser für Einbrenn-Systeme.

Die OH-haltigen Vorkondensate werden mit Polyisocyanaten zu urethanmodifizierten Polyestern umgesetzt. Als erfindungsgemäß einsetzbare Polyisocyanate kommen aliphatische, cycloaliphatische, araliphatische, aromatische und heterocyclische Polyisocyanate in Betracht, wie sie z. B. von W. Siefken in Justus Liebigs Annalen der Chemie, 562, Seiten 75 bis 136 beschrieben werden, beispielsweise Ethylendiisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat, sowie beliebige Gemische dieser Isomeren, 1-Isocyanato-3,3,5-trimethyl-5-isocyanatomethyl-cyclohexan (DE-AS 1 202 785, US-A-3 401 190), 2,4- und 2,6-Hexahydrotoluylen-diisocyanat sowie beliebige Gemische dieser Isomeren, Hexahydro-1,3- und/oder -1,4-phenylen-diisocyanat, Perhydro-2,4'- und/oder -4,4'-Diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4'- und/oder -4,4'-diisocyanat, Naphthylen-1,5-diisocyanat, Triphenylmethan-4,4',4''-triisocyanat, perchlorierte Arylpolyisocyanate, wie sie z. B. in der DE-AS 1 157 601 (US-A-3 277 138) beschrieben werden, Carbodiimidgruppen aufweisende Polyisocyanate, wie sie in der DE-PS 1 092 007 (US-A-3 152 162) beschrieben werden, Diisocyanate, wie sie in der US-A-3 492 330 beschrieben werden, Isocyanuratgruppen aufweisende Polyisocyanaten, wie sie z. B. in der US-A-3 001 973, in den DE-PS 1 022 789, 1 222 067 und 1 027 394 sowie in den DE-OS 1 929 034 und 2 004 048 beschrieben werden, Urethangruppen aufweisende Polyisocyanate, wie sie z. B. in der BE-A-752 261 oder in der US-A-3 394 164 beschrieben werden, Biuretgruppen aufweisende Polyisocyanate, wie sie z. B. in der DE-PS 1 101 394 (US-A-3 124 605 und 3 201 372) sowie in der GB-A-889 050 beschrieben werden, durch Telomerisationsreaktionen hergestellte Polyisocyanate, wie sie z. B. in der US-A-3 654 106 beschrieben werden, Estergruppen aufweisende Polyisocyanate, wie sie z. B. in der GB-A-965 474 und 1 027 956, in der US-A-3 567 763 und in der DE-PS 1 231 688 genannt werden, polymere Fettsäurereste enthaltende Polyisocyanate gemäß der US-A-3 455 883.

Bevorzugt werden in der Regel die technisch leicht zugänglichen Di-, Tri- und Tetraisocyanate, z. B. das 2,4- und 2,6-Toluylendiisocyanat sowie beliebige Gemische dieser Isomeren (»TDI«), 1,6-Hexamethylendiisocyanat, Perhydro-2,4'- und/oder -4,4'-di-phenylmethan-diisocyanat und 1-Isocyanato-3,3,5-trimethyl-5-isocyanatomethylcyclohexan.

Selbstverständlich können Gemische verschiedener Polyisocyanate verwendet werden.

Besonders bevorzugt sind dabei die letztgenannten drei nicht-aromatischen Diisocyanate, da sie zu besonders vergilbungsarmen Überzügen führen.

Die Mengenverhältnisse an Polyisocyanat und Vorkondensat sind vorzugsweise so zu wählen, daß

a) der Gehalt an NCO-Gruppen in den zur Komponente I umzusetzenden Reaktionspartnern 0,5 bis 25, vorzugsweise 3 bis 15 Gew.-%, bezogen auf die Komponente I, beträgt und gleichzeitig
b) im Mittel mindestens eine, vorzugsweise 2 bis 4 OH-Gruppen pro Molekül des Umsetzungsproduktes aus dem Vorkondensat und dem Polyisocyanat frei bleiben.

Die Umsetzung zwischen dem Vorkondensat und dem Polyisocyanat kann nach üblichen Techniken der Herstellung von Urethanen erfolgen. Man kann die Vorkondensate direkt mit den Polyisocyanaten bei Raumtemperatur oder bei erhöhter Temperatur zur Umsetzung bringen, wobei mit und ohne Katalysator und mit und ohne Lösungsmittel gearbeitet werden kann. Als Katalysatoren eignen sich z. B. Benzoylchlorid oder tertiäre Amine. Als Lösungsmittel eignen sich z. b. Ester und Ketone. Es ist ebenfalls möglich, Gemische verschiedener einzeln hergestellter Vorkondensate einzusetzen, wobei als Mischungspartner auch OH-haltige unkondensierte Substanzen, z. B. Ethylenglykol, Propylenglykol, mitverwendet werden können.

In einer bevorzugten Ausführungsform wird auf Lösungsmittel und Katalysatoren verzichtet und die Umsetzung in der Schmelze bei 40—120, vorzugsweise 50—90° C, vorgenommen. Die Umsetzung wird als beendet angesehen, wenn der Gehalt an freiem NCO unter 0,8, vorzugsweise unter 0,3 Gew.-%, bezogen auf das Gewicht der Schmelze, abgesunken ist.

Die erhaltenen Umsetzungsprodukte werden anschließend mit Di- und/oder Tricarbonsäureanhydriden auf Säurezahlen von 10—40, vorzugsweise 10—30, aufgesäuert und ergeben so die Komponente I. Diese Umsetzung wird vorzugsweise ohne Lösungsmittel in der Schmelze bei erhöhter Temperatur z. B. 100—200, vorzugsweise 120—160° C, vorgenommen. Es ist möglich, bei dieser Reaktionsstufe an die Halbesterbildung weitere Veresterungsschritte anzuschließen, d. h. die entstandenen Halbester, vorzugsweise im höheren angegebenen Temperaturbereich, zu höhermolekularen Produkten weiterzukondensieren. Die einzusetzenden Mengen an Polycarbonsäureanhydriden ergeben sich aus der gewünschten Säurezahl.

Als geeignete Polycarbonsäureanhydride sind beispielhaft zu nennen: Maleinsäureanhydrid, Bernsteinsäureanhydrid, Phthalsäureanhydrid, Tetrahydrophthalsäureanhydrid, Hexahydrophthalsäureanhydrid, Trimellithsäureanhydrid, Norbornandicarbonsäureanhydrid, Norbonendicarbonsäureanhydrid sowie weitere bei den Polycarbonsäuren des Vorkondensates aufgeführte Anhydride.

Harze des Aufbaus der Komponente I, bei denen die Säurezahl im oberen vorgesehenen Bereich liegt, eignen sich bevorzugt für Einbrennsysteme, während für Lufttrocknung vorgesehene Systeme bevorzugt Säurezahlen im niedrigeren Bereich der vorgesehenen Spanne besitzen.

Die urethanmodifizierten Polyester I sind wasserunlösliche, schmelzbare Massen, welche in den angegebenen Mengen ohne weitere Zusätze nicht in wäßriger Phase verteilbar sind. Es ist deswegen auch nicht erwünscht, den Polyester I durch Einbau von Polyalkylenoxiden mit mehr als 3 Alkylenoxideinheiten pro Molekül, z. B. sog. Polywachsen, zu modifizieren, da derartige Bestandteile den Polyester I hydrophil machen, was sich in geringerer Wasserbeständigkeit der aus den erfindungsgemäßen Polyesterdispersionen hergestellten Überzüge auswirkt. Vorzugsweise sind die Komponenten I völlig frei von Ethergruppen.

Ein wichtiges Kriterium für die Brauchbarkeit der urethanmodifizierten Polyester I ist, daß sie schmelzbar sind. Es ist daher nicht erwünscht, die Polykondensation bzw. Polyaddition zur Herstellung der Komponente I auf irgendeiner der Stufen so weit voranzutreiben, daß gelartige Produkte oder Produkte mit elastomeren Eigenschaften entstehen. Dagegen ist es nicht unbedingt erforderlich, daß sich die Komponente I in üblichen Lacklösungsmitteln wie z. B. Xylol oder Ethylglykolacetat, klar löst. Erstaunlicherweise wurde gefunden, daß auch aus nur teilweise in Xylol löslichen Harzen erfindungsgemäße Dispersionen mit guten Eigenschaften herstellbar sind.

Hat man bei irgendeiner der Stufen zur Herstellung der Komponente I Lösungsmittel verwendet, so muß dieses spätestens vor der Dispergierung, z. B. durch Destillation, entfernt werden.

Die Komponente I wird erfindungsgemäß mit Hilfe der Emulgatoren IIa und IIb in wäßriger Phase dispergiert.

Bevorzugte nichtionische Emulgatoren IIa) sind ethoxylierte aliphatisch substituierte Aromaten. So erhält man erfindungsgemäße Polyesterdispersionen mit besonders einheitlichen Teilchengrößen bei der Verwendung von ethoxyliertem p-n-Nonylphenol. Andere bevorzugte Emulgatoren IIa) erhält man durch Ethoxylierung von Anlagerungsprodukten von Styrol und seinen Derivaten an Phenole, wie dies z. B. in der DE-PS 1 121 814 beschrieben ist. Danach werden Styrol, $\alpha$-Methylstyrol oder Vinyltoluol an Phenol, Kresole oder Xylenole angelagert und die erhaltenen Reaktionsprodukte ethoxyliert. In

Emulgatormischungen bedeutet n den Mittelwert an Polyethylenoxideinheiten.

Bezüglich HLB-Werte siehe Ullmanns Encyclopädie der Technischen Chemie, 4. Aufl., Bd. 10, S. 426—463, Verlag Chemie, Weinheim 1975.

Bevorzugte Emulgatorharze IIb) bestehen aus einem gegebenenfalls ölmodifizierten Polyesterteil (hydrophob) und einem gegebenenfalls durch Alkoxygruppen mit 1 bis 4 C-Atomen terminierten, Polyalkylenoxidteil (hydrophil) mit 6 bis 100, vorzugsweise 10 bis 70 Alkylenoxidresten pro Polyalkylenoxidkette, wobei der Polyalkylenoxidteil aus mehreren einzelnen Polyalkylenoxidketten besteht und die Alkylengruppe 2 bis 4, vorzugsweise 2 C-Atome enthält.

Die Emulgatorharze IIb) können 0,1 bis 10 Gew.-%, bezogen auf Emulgatorharz IIb), Urethangruppen enthalten. Nach einer bevorzugten Ausführungsform werden die einseitig blockierten (z. B. veretherten) Polyalkylenoxide mit etwa äquimolaren Mengen Diisocyanat umgesetzt, so daß Polyalkylenoxide entstehen, die pro Molekül eine freie Isocyanatgruppe tragen, welche dann ihrerseits zur Anknüpfung an den Polyesterteil von IIb) dienen kann.

Das mittlere Molekulargewicht der für die Herstellung der Emulgatorharze IIb) bevorzugten Polyester kann 400 bis 4000 betragen (dampfdruckosmometrisch in Aceton bestimmt).

Die verwendeten Polyalkylenoxide können Homopolyether, aber auch Copolyether in Block- oder statistischer Verteilung sein; Homopolyethylenoxide sind besonders bevorzugte Ausgangsmaterialien für die Herstellung der Emulgatorharze IIb).

Als Verknüpfer zwischen Polyester- und Polyalkylenoxidteil kommen im Prinzip sämtliche Diisocyanate in Betracht.

Besonders bevorzugt werden in der Regel die technisch leicht zugänglichen Polyisocyanate, z. B. das 2,4- und 2,6-Toluylendiisocyanat sowie beliebige Gemische dieser Isomeren (»TDI«), 1,6-Hexamethylendiisocyanat, Perhydro-2,4'- und/oder -4,4'-diphenylmethan-diisocyanat und 1-Isocyanato-3,3,5-trimethyl-5-isocyanatomethylcyclohexan.

Menge und Art des Emulgatorharzes IIb) werden am besten so ausgewählt, daß der Gesamtgehalt an Polyalkylenoxideinheiten im nichtflüchtigen Anteil der erfindungsgemäßen Polyesterdispersion unterhalb 4 Gew.-% bezogen auf die Summe der Komponenten I, IIa und IIb liegt.

Nach einer bevorzugten Ausführungsform enthält das Emulgatorharz IIb) im nicht-neutralisierten Zustand Carboxylgruppen entsprechend einer Säurezahl von weniger als 50, vorzugsweise 15 bis 35. Das Emulgatorharz IIb) kann bereits vor der Vereinigung mit der wäßrigen Phase III teilweise oder ganz neutralisiert werden. Bevorzugte Neutralisationsmittel sind Alkalihydroxide, Ammoniak, primäre, sekundäre und tertiäre Amine, wie z. B. Ethylamin, Di- und Triethylamin, Mono-, Di- und Triethanolamin, Dimethylethanolamin, Methyldiethanolamin, Dimethylaminomethylpropanol. Die Neutralisation kann aber auch bei Zugabe in die wäßrige Phase erfolgen.

Verfahren zur Herstellung der Emulgatorharze IIb) sind bekannt; vgl. DE-OS 2 528 212, 2 556 621.

Zu besonders glatten Dispersionen führen Emulgatorharze IIb), die man dadurch herstellt, daß man einen Polyester mit Ölgehalten von 0—30 Gew.-% mit einer Säurezahl von <5 und einer Hydroxylzahl von 50—250 als hydrophoben Teil herstellt, diesen mit den bereits erwähnten hydrophilen Isocyanatkomponenten bis zum völligen Umsatz der NCO-Gruppen abreagieren läßt, anschließend mit einem Dicarbonsäureanhydrid auf Säurezahlen von 15—35 aufsäuert und entweder durch direkte Zugabe eines Amins in die Harzschmelze oder durch Zugabe der Harzschmelze in die Amin und gegebenenfalls Komponente IIa enthaltende Wasserphase neutralisiert. Im letztgenannten Verfahren fällt das Emulgatorharz IIb zusammen mit dem Emulgator IIa als wäßrige Lösung bzw. Dispersion, als sogenanntes Emulgatorkonzentrat, an.

Die urethanmodifizierten Polyester I können in wäßriger Phase dispergiert werden, indem man die Polyester I zusammen mit den Stoffen IIa) und IIb) in der Schmelze bei 80 bis 120° C innig verrührt und anschließend dieser Schmelze die wäßrige Phase III zusetzt. Dieser Prozeß kann in der Regel in einem üblichen Reaktor zur Herstellung von Polyestern vorgenommen werden. Schnellaufende Mischaggregate oder Rührwerke sind dabei meist nicht erforderlich. Selbstverständlich kann die Schmelzdispergierung auch durch Zugabe der organischen Harzphase I und II in die wäßrige Phase III erfolgen.

Als vom Arbeitsablauf her besonders günstig hat sich ein Verfahren erwiesen, bei dem in der wäßrigen Phase III die Stoffe IIa) und IIb) in einem Rührkessel vorgelegt und anschließend die Polyesterschmelze I unter Rühren zudosiert wird. IIb) wird dabei gegebenenfalls im neutralisierten Zustand vorgelegt.

Nach Vereinigung aller zur Dispersionsbildung erforderlichen Komponenten I, IIa, IIb und III wird die Dispersion in der Regel für 15 Minuten bis 5 Stunden bei 50—95° C nachgerührt.

Die Komponente III enthält 30 bis 150% der für eine vollkommene Neutralisation der Carboxylgruppen der Komponenten I und IIb) ausreichenden Alkali-, Ammoniak- oder Aminmenge. Geeignete Neutralisationsmittel wurden bereits im Zusammenhang mit der Komponente IIb genannt. Bevorzugt sind Dimethylethanolamin und Triethylamin.

Zweckmäßigerweise wird bei der Emulgierung in der Schmelze das Neutralisationsmittel mit einem Teil des Wassers in die Schmelze eingerührt und nach dem Homogenisieren der Rest des Wassers zur Einstellung der Dispersion auf den gewünschten Festkörpergehalt, üblicherweise zwischen 30 und 50 Gew.-%, zugefügt.

Die Viskosität der entstehenden Dispersion ist bequem durch die Menge des zugegebenen Neutralisationsmittels beeinflußbar. Hat z. B. der Polyester I eine Säurezahl <18, so führen Neutralisationsgrade von ca. 90% bei ca. 40 Gew.-% Festkörper bereits zu hochviskosen Dispersionen. Geringere Neutralisationsgrade können unter diesen Umständen angezeigt erscheinen, da sie bei gleichem Festkörper gute Fließfähigkeit der Dispersionen gewährleisten. Bei niedrigeren Säurezahlen des Polyesters ist die geschilderte Viskositätsabhängigkeit weniger stark ausgeprägt. Es ist natürlich möglich, den angestrebten Neutralisationsgrad bzw. damit die gewünschte Viskosität in mehreren Stufen einzustellen.

Die erfindungsgemäßen Dispersionen können bei der Herstellung oder danach mit anderen Polymeren, z. B. Alkydharzen, Polyacrylaten, Polyurethanen sowie Hartharzen, z. B. Kolophonium oder Xylol/Formaldehyd-Kondensaten, also unmodifizierten und modifizierten Polymeren, wie sie bei H. Kittel, Lehrbuch der Lacke und Beschichtungen, Bd. I, Teil 1, Verlag W. A. Colomb, Stuttgart-Berlin 1971, S. 122 bis 445 beschrieben sind, kombiniert werden.

Die erfindungsgemäßen Systeme eignen sich besonders gut zur Herstellung von Lacken, insbesondere Einbrennlacken, wobei sich als Öle insbesondere Ricinusöl und Sojaöl und die entsprechenden, gegebenenfalls dehydratisierten, Fettsäuren bewährt haben. Den erfindungsgemäßen Dispersionen kann man wasserverdünnbare, vernetzende Aminoplastharze, z. B. Melaminharze, in Mengen von 10 bis 50, vorzugsweise 10 bis 30, Gew.-%, bezogen auf das Gemisch von Polyester I und Melaminharz, zusetzen. Diese Gemische können direkt nach Einstellung der notwendigen Viskosität und gegebenenfalls nach Zusatz von Katalysatoren und Hilfsstoffen zu Überzügen verarbeitet und thermisch ausgehärtet werden.

Die erfindungsgemäßen Dispersionen können gegebenenfalls auch für andere Einsatzgebiete als den Lacksektor verwendet werden, z. B. bei der Herstellung nichtflächiger Gebilde wie Formkörper, Gele und dergleichen.

Man kann den Dispersionen geringe Menge üblicher Hilfs- und Zusatzstoffe zusetzen, z. B. Schutzkoloidale, Antischaummittel, Antiabsetzmittel, Frostschutzmittel, sowie viskositätsbeeinflussende Zusätze, Verlaufsmittel, Vernetzungskatalysatoren; jedoch ist hier in jedem Fall die Verträglichkeit zu prüfen.

Mitunter ist es aus Gründen besserer Verarbeitbarkeit und Pigmentaufnahme günstig, die Dispersion bei der Lackherstellung auf bestimmte pH-Werte, z. B. 7,5 bis 8,5, zu bringen. Meist verwendet man dazu die bereits zur Neutralisation benutzten Neutralisationsmittel. Geringe Zusätze wassermischbarer Lösungsmittel, wie Ethanol oder Butylglykol, können ebenfalls zugefügt werden, jedoch ist das meistens nicht erforderlich. Die mit den erfindungsgemäßen Dispersionen hergestellten Lacke lassen sich nach üblicher Applikationstechnik, z. B. durch Tauchen, Spritzen, Gießen auf die zu lackierenden Materialien auftragen. Die dazu notwendige Viskosität stellt man in der Regel durch Zugabe von Wasser ein.

Die aufgetragenen Lackfilme können bei Raumtemperatur und bei höherer Temperatur, z. B. zwischen 60 und 360°C, ausgehärtet werden. Der hohe Temperaturbereich wird dabei vorzugsweise für ölarme und ölfreie Polyester I benutzt.

Die folgenden Beispiele erläutern die Erfindung; die angegebenen Teile sind Gewichtsteile, Prozentangaben bedeuten Gewichtsprozente.

Der Begriff Vorkondensate deckt sich mit dem der Beschreibung. Die Komponente I wird als Harz bezeichnet.

Emulgator IIa)

Auf Nonylphenol gepfropftes Ethylenoxid (Molverhältnis 1 : 20) mit folgenden Eigenschaften:

| | |
|---|---|
| Trübungspunkt (1%ig in Wasser): | ca. 100°C |
| Oberflächenspannung (0,1 g/l Wasser): | 44,0 dyn/cm ($44 \cdot 10^{-6}$ N/mm) |
| Netzwirkung (DIN 53 901): | ca. 60 sec. bei 60°C |
| Fp.: | ca. 30°C |
| HLB-Wert: | 16 |

Emulgator IIb)

In einer 2 l Rührbecher-Apparatur, die mit Innenthermometer, Rührer, Tropftrichter und Gaseinleitungsrohr versehen ist, werden 400 g eines auf n-Butanol gestarteten Polyethylenoxidalkohols des Molekulargewichts 2000 30 Minuten bei 120°C unter Anlegen eines Vakuums (15 Torr) (20 mbar) entwässert. In die auf 100°C abgekühlte Schmelze werden zunächst 2 ml Benzoylchlorid eingerührt; danach fügt man 33,6 g Hexamethylendiisocyanat in einem Guß zu.

Nach 60 Minuten Reaktionszeit wird der Isocyanat-Gehalt der Mischung bestimmt. Die NCO-Zahl der Mischung beträgt danach 1,8 bis 1,9% NCO (ber.: 1,94%).

Nach Abkühlen der Schmelze erhält man die für weitere Umsetzungen geeignete hydrophile Isocyanatkomponente als wachsartig kristalline Substanz.

134 g Trimethylolpropan und 130,7 g Tetrahydrophthalsäureanhydrid werden bei 220° C unter Stickstoffatmosphäre bis zur Säurezahl 4 verestert. Die Viskosität der erhaltenen Vorstufe entsprach einer Auslaufzeit (gemessen als 60%ige Lösung in Dimethylformamid nach DIN 53 211, DIN-Becher 4) von 170 Sekunden.

500 g dieser Vorstufe werden im Vakuum entwässert und anschließend mit 88,2 g der hydrophilen Isocyanatkomponente bei 100 bis 105° C miteinander umgesetzt, bis keine freien Isocyanatgruppen mehr nachweisbar sind.

580 g dieses Produktes werden mit 39 g Tetrahydrophthalsäureanhydrid bei 120° C zu einem Polyhalbester mit einer Säurezahl von ca. 27 umgesetzt.

Zu 610 g dieser Stufe gibt man unter Rühren bei 95 bis 100° C vorsichtig 26,1 g Dimethylethanolamin. Das Harz erstarrt beim Abkühlen zu einer zähelastischen, schmelzbaren Masse.

## Vorkondensat A

1313,3 Teile eines Veresterungsproduktes aus Trimethylolpropan und einem Fettsäuregemisch mit ca. 50% konjugierter Fettsäure im Molverhältnis 1 : 1, 1294,7 Teile Dimethylterephthalat, 2426,7 Teile Neopentylglykol wurden in Gegenwart von 1,67 Teilen Tetrabutyltitanat unter Methanolabtrennung umgeestert. Nach Beendigung der Methanolfreisetzung wurden ca. 1140 Teile überschüssiges Neopentylglykol im Vakuum abdestilliert. Man erhielt ein Produkt mit einer OH-Zahl von ca. 230.

## Harz A

728,4 Teile Vorkondensat A werden unter Stickstoffatmosphäre auf 110° C aufgeheizt und 151,2 Teile Hexamethylendiisocyanat in 30 Minuten bei 110—114° C zugetropft. Nach 1½ Stunden Reaktionszeit bei 120° C betrug der Gehalt an freiem NCO ca. 0,1%. 870 Teile dieses Produktes wurden mit 43,6 Teilen Maleinsäureanhydrid bei 140° C bis zu einer Säurezahl von ca. 26 umgesetzt.

## Beispiel 1

465 Teile Harz A, 20,0 Teile Emulgator IIb) und 15,0 Teile Emulgator IIa) werden 15 Minuten bei 120° C unter Stickstoffatmosphäre gemischt, auf 80° C gekühlt und eine Mischung aus 19,2 Teilen Dimethylethanolamin und 730,8 Teilen Wasser in 30 Minuten zugetropft, wobei die Temperatur auf 50° C fällt. Man rührt noch 30 Minuten bei 50° C nach und erhält eine Dispersion mit ca. 40% Festkörper.

100 Teile dieser Dispersion wurden mit 35 Teilen Melaminharz, 6,3 Teilen 10%igem Dimethylethanolamin, 40 Teilen Wasser und 210 Teilen $TiO_2$-Pigment in einer Perlmühle gemahlen und anschließend mit 425 Teilen Dispersion, 78 Teilen Melaminharz und 70 Teilen Wasser aufgelackt. Nach einem Tag Reifezeit wurde auf Glasplatte bzw. Blech gespritzt und nach dem Ablüften 30 Minuten bei 140° C eingebrannt. Man erhält einen hochglänzenden Überzug mit folgenden Eigenschaften:

| | |
|---|---|
| Schichtdicke: | ca. 35 µm |
| Glanz Gardner | |
| 60°: | 94 |
| 20°: | 80 |
| Bleistifthärte: | 4 H |
| Pendelhärte: | 150 sec |
| Knickprobe: | gut |
| Lösungsmittelschädigung (Wattebausch, 1 Min.) | |
| Toluol: | keine |
| Ethylenglykolacetat: | keine |
| Aceton: | keine |
| Wasserfestigkeit bei Raumtemperatur: | 21 Tage ohne Einfluß |

## Harz B

1) 1759 Teile Fettsäuregemisch mit 50 Teilen konjugierter Fettsäuren und 855 Teile Trimethylolpropan werden bis zu einer Säurezahl von ca. 2 in einer Stickstoffatmosphäre bei 230° C vorverestert und anschließend 1848 Teile dieses Esters mit 1553 Teilen Isophthalsäure und 1460 Teile Neopentylglykol zum Oligoester B1 (SZ 4) umgesetzt.

2) 1275 Teile lineare gesättigte Fettsäuren ($C_{16}$—$C_{18}$) werden mit 675 Teilen Trimethylolpropan, 1660

Teilen Isophthalsäure und 1560 Teilen Neopentylglykol in gleicher Weise zum Oligoester B2 (SZ 4) verestert.

### Beispiel 2

109,6 Teile Harz B1 und 107,0 Teile Harz B2 werden bei 110° C unter Stickstoffatmosphäre vorgelegt und unter Rühren ein Gemisch aus 25,2 Teilen Hexamethylendiisocyanat-1,6 und 33,3 Teilen 1-Isocyanato-3,35-trimethyl-5-isocyanatomethylcyclohexan zugetropft. Nach einer Nachreaktionszeit bei 120°C gibt man 22,8 Teile Tetrahydrophthalsäureanhydrid zu und setzt bei 140°C zu einem urethanmodifizierten Ester mit einer Säurezahl von ~28 um.

267 Teile dieses Produktes, 24 Teile Emulgator IIb und 9 Teile Emulgator IIa werden bei 120°C vermischt, auf 90°C gekühlt und bei 90—65°C ein Gemisch aus 11,9 Teilen Dimethylethanolamin und 438,1 Teilen Wasser unter Rühren zugegeben. Man erhält eine sehr feinteilige lagerstabile Dispersion mit einem Festkörper von ca. 40%.

Die Dispersion wurde mit Co-Siccativ versetzt (0,03% Co-Metall, bezogen auf Festkörper), auf eine Glasplatte aufgezogen und an der Luft bei Raumtemperatur trocknen lassen. Man erhielt nach 90 Minuten Trockenzeit einen trockenen, klaren, festen, widerstandsfähigen Lackfilm.

### Vorkondensat C

23,6 Teile Hexandiol-1,6, 62,4 Teile Neopentylglykol, 11,4 Teile Propandiol-1,2, 6,7 Teile Trimethylolpropan, 51,8 Teile Phthalsäureanhydrid, 33,2 Teile Isophthalsäure und 29,2 Teile Adipinsäure werden unter Stickstoffatmosphäre unter Wasserabspaltung bei einer Maximaltemperatur von 220° C bis zu einer Säurezahl von ca. 3 verestert.

### Harz C

Zu 197,6 Teilen Vorkondensat C gibt man bei 110—120°C unter Rühren vorsichtig 31,9 Teile Hexamethylendiisocyanat zu und setzt so lange bei 120° C um, bis kein freies NCO mehr nachweisbar ist. Das Produkt wird anschließend mit 16,3 Teilen Tetrahydrophthalsäureanhydrid bei 140°C zum Polyhalbester aufgesäuert. Das Endprodukt hat eine Säurezahl von 27,6—28.

### Beispiel 3

267 Teile Harz C, 24 Teile Emulgator IIb, 9 Teile Emulgator IIa werden bei 120° C verschmolzen, auf 90°C gebracht und ein Gemisch von 11,7 Teilen Dimethylethanolamin und 438,3 Teile Wasser zugetropft. Man rührt für 30 Minuten bei 60°C und kühlt langsam ab. Die entstandene Dispersion ist homogen und feinteilig und hat ca. 40% Festgehalt.

50 Teile dieser Dispersion, 17,5 Teile Melaminharz, 3,1 Teile Dimethylethanolamin, 20 Teile Wasser und 105 Teile $TiO_2$-Pigment werden auf einer Perlmühle angerieben. Das Mahlgut wird mit 212,5 Teilen Dispersion aus Beispiel 3 und 39 Teilen Melaminharz aufgelackt und mit Wasser auf Spritzviskosität verdünnt. Nach einer Reifezeit wird auf ein Prüfblech aufgespritzt und nach dem Ablüften 30 Minuten bei 120°C eingebrannt. Man erhält einen hochglänzenden, elastischen Überzug mit folgenden Eigenschaften:

| | |
|---|---|
| Schichtdicke: | 35—40 µm |
| GlanzGardner | |
| 60°: | 95 |
| 20°: | 86 |
| Gitterschnitt: | 1 |
| Dornbiegeversuch ASTM-D-522-60: | 32% |
| Erichsen-Dehnung (DIN 53 156): | 10 |
| Schlagelastizität ASTM-D-2794 | |
| direkt: | 82 |
| indirekt: | 82 |

**Patentansprüche**

1. Wäßrige Dispersionen von urethanmodifizierten Polyestern, dadurch gekennzeichnet, daß sie aus

I. 25—60 Gew.-% schmelzbaren urethanmodifizierten verzweigten Oligo- und/oder Polyestern mit Molekulargewichten <5000 und Säurezahlen von 10—40, und einem Gehalt von <1 Gew.-%, bezogen auf I, Harnstoffgruppen, wobei die Substanzen I durch Umsetzung von urethanmodifizierten Oligo- und/oder Polyestern mit Säurezahlen <10 und OH-Zahlen von 30—500 mit Di- und/oder Tricarbonsäureanhydriden erhältlich sind,

IIa) 0,02 bis 4 Gew.-% mindestens eines nichtionischen Emulgators mit einem berechneten HLB-Wert von 10 bis 20, vorzugsweise entsprechend der Formel

$R-(OCH_2-CH_2)_n-OH$,

worin

R einen Alkylrest mit 12 bis 30 C-Atomen oder

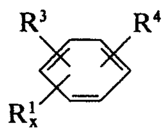

$R^1$ einen Alkylrest mit 4 bis 20 C-Atomen oder

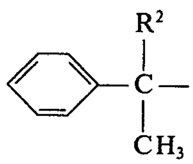

$R^2$ ein Wasserstoffatom, einen Methyl- oder Phenylrest,
$R^3$ eine Methylgruppe, einen Phenylrest oder ein Wasserstoffatom,
$R^4$ eine Methylgruppe oder ein Wasserstoffatom und
n eine Zahl von 10 bis 40, vorzugsweise 15 bis 25,
x eine Zahl von 1 bis 3,5, vorzugsweise 1—3,0,

bedeuten,

IIb) 0,02 bis 4 Gew.-% mindestens eines polyethermodifizierten Polyester-Emulgatorharzes, das 10 bis 50, vorzugsweise 10 bis 20 Gew.-%, bezogen auf Emulgatorharz IIb, einkondensierte Polyalkylenglykolreste, vorzugsweise über Urethangruppe mit dem Polyester-Emulgatorharz-Molekül verbunden, enthält und

III) 32 bis 75 Gew.-% wäßriger Phase, die 30 bis 150% der für eine vollkommene Neutralisation der Carboxylgruppen der Polyester I und IIb) ausreichenden Alkali-, Ammoniak- oder Aminmenge enthält, wobei sich die Prozentangaben der Komponenten I, IIa, IIb und III auf die Summe der Komponenten beziehen,

bestehen.

2. Dispersionen nach Anspruch 1, dadurch gekennzeichnet, daß die urethanmodifizierten Oligo- und/oder Polyester I Molekulargewichte <4000 besitzen.

3. Dispersionen nach Ansprüchen 1 und 2, dadurch gekennzeichnet, daß die urethanmodifizierten Oligo- und/oder Polyester I OH-Zahlen von 50—280 besitzen.

4. Verfahren zur Herstellung von Dispersionen, gemäß Ansprüchen 1—3, dadurch gekennzeichnet, daß man den Oligo- und/oder Polyester I in Gegenwart der Emulgatoren IIa und IIb in der wäßrigen Phase III dispergiert.

**Claims**

1. Aqueous dispersions of urethan-modified polyester, characterised in that they consist of

I. from 25 to 60% by weight of fusible urethane-modified branched oligo and/or polyesters having molecular weights below 5000 and acid numbers of from 10 to 40 and a content of less than 1% by weight, based on I, of urea groups, the substances I being obtainable by the reaction of

urethane-modified oligo- and/or polyesters having acid numbers below 10 and OH-numbers of from 30 to 500 with di- and/or tricarboxylic acid anhydrides,

IIa) from 0.02 to 4% by weight of at least one non-ionic emulsifier having a calculated HLB-value of from 10 to 20, preferably corresponding to the following formula

$$R-(OCH_2-CH_2)_n-OH,$$

in which

R represents an alkyl radical containing from 12 to 30 carbon atoms or

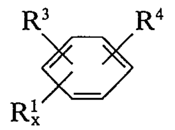

$R^1$ represents an alkyl radical containing from 4 to 20 carbon atoms or

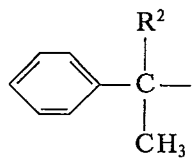

$R^2$ represents a hydrogen atom, a methyl or phenyl radical,
$R^3$ represents a methyl group, a phenyl radical or a hydrogen atom,
$R^4$ represents a methyl group or a hydrogen atom and
n is a number of from 10 to 40 and preferably from 15 to 25,
x is a number of from 1 to 3.5 and preferably from 1 to 3.0,

IIb) from 0.02 to 4% by weight of at least one polyethermodified polyester emulsifier resin containing from 10 to 50 and preferably from 10 to 20% by weight, based on emulsifier resin IIb, of co-condensed polyalkylene glycol residues, preferably attached to the polyester emulsifier resin molecule through a urethane group, and

III) from 32 to 75% by weight of an aqueous phase which contains from 30 to 150% of the quantity of alkali, ammonia or amine sufficient for completely neutralising the carboxyl groups of polyesters I and IIb),

the percentages of components I, IIa, IIb and III being based on the sum of components I—III.

2. Dispersions as claimed in Claim 1, characetrised in that the urethane-modified oligo- and/or polyesters I have molecular weights below 4000.

3. Dispersions as claimed in Claims 1 and 2, characterised in that the urethane-modified oligo- and/or polyesters I have OH-numbers of from 50 to 280.

4. A process for producing the dispersions claimed in Claims 1 to 3, characterised in that the oligo- and/or polyester I is dispersed in the presence of emulsifiers IIa and IIb in the aqueous phase III.

**Revendications**

1. Dispersions aqueuses de polyesters modifiés par des uréthannes, caractérisées en ce qu'elles consistent en

I. 25—60% en poids d'oligo- et/ou polyesters ramifiés, modifiés par des uréthannes, fusibles, ayant des poids moéculaires de moins de 5000 et des indices d'acide de 10—40, et une teneur en groupes urée de moins de 1% en poids, par rapport à I, les substances I pouvant être obtenues par réaction d'oligo- et/ou polyesters modifiés par des uréthannes, ayant des indices d'acide inférieurs à 10 et des indices d'OH de 30—500 avec des anhydrides d'acides di- et/ou tricarboxyliques,

IIa) 0,02 à 4% en poids d'au moins un émulsifiant non ionique ayant une valeur BHL calculée de 10 à 20, répondant de préférence à la formule

$$R-(OCH_2-CH_2)_n-OH,$$

dans laquelle

R représente un reste alkyle en $C_{12}$—$C_{30}$ ou un groupe

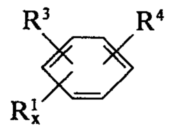

$R^1$ représente un reste alkyle en $C_4$—$C_{20}$ ou un groupe

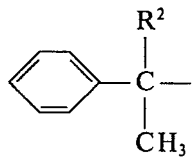

$R^2$ représente un atome d'hydrogène ou un reste méthyle ou phényle,
$R^3$ représente un groupe méthyle, un reste phényle ou un atome d'hydrogène,
$R^4$ représente un groupe méthyle ou un atome d'hydrogène et
n représente un nombre de 10 à 40, de préférence 15 à 25,
x est un nombre de 1 à 3,5, de préférence 1—3,0,

IIb) 0,02 à 4% en poids d'au moins une résine de polyester-émulsionnant modifié par un polyéther, qui contient 10 à 50, de préférence 10 à 20% en poids, par rapport à la résine-émulsionnant IIb), de restes polyalkylèneglycols condensés, de préférence liés par des groupes uréthannes à la molécule de résine polyester-émulsionnant, et

III) 32 à 75% en poids de phase aqueuse, qui contient 30 à 150% de la quantité d'alcali, d'ammoniac ou d'amine suffisante pour une neutralisation complète des groupes carboxyles des polyesters I et IIb), les pourcentages des composants I, IIa), IIb) et III étant rapportés à la somme des composants I—III.

2. Dispersions selon la revendication 1, caractérisées en ce que les oligo- et/ou polyesters I modifiés par des uréthannes ont des poids moléculaires inférieurs à 4000.

3. Dispersions selon les revendications 1 et 2, caractérisées en ce que les oligo- et/ou polyesters I modifiés par des uréthannes ont des indices d'OH de 50—280.

4. Procédé pour la fabrication de dispersions selon les revendications 1 à 3, caractérisé en ce que l'on disperse les oligo- et/ou polyesters I en présence des émulsionnants IIa) et IIb) dans la phase aqueuse III.